# EUROPÄISCHE PATENTANMELDUNG

(11) **EP 3 098 029 A1**
(43) Veröffentlichungstag der Anmeldung: **30.11.2016**
(21) Anmeldenummer: 15169116.9
(22) Anmeldetag: 26.05.2015
(51) Int. Cl.: B25D 17/20, B25D 17/26, B25F 5/00, F16K 15/14, F16H 57/027, F16K 17/18

(54) **HANDWERKZEUGGETRIEBEVERSCHLUSS UND HANDWERKZEUGMASCHINE**

(71) Anmelder: HILTI Aktiengesellschaft, 9494 Schaan (LI)
(72) Erfinder: Ohlendorf, Oliver, 86899 Landsberg (DE)
(74) Vertreter: Hilti Aktiengesellschaft Corporate Intellectual Property

(57) **Zusammenfassung**

Handwerkzeuggetriebeverschluss (10) mit einem Grundkörper (1) zum Verschließen einer Getriebegehäuseöffnung (70) eines Getriebegehäuses (80) einer Handwerkzeugmaschine (100), insbesondere eines Bohrhammers oder Kombihammers, wobei der Handwerkzeuggetriebeverschluss (10) einen Luftkanal (L) aufweist, durch den eine Luftmasse (LM) in das und aus dem Getriebegehäuse (80) strömen kann, und wobei der Handwerkzeuggetriebeverschluss (10) ein im Luftkanal (L) angeordnetes bidirektionales Druckventil (3) aufweist, über das sowohl ein im Getriebegehäuse (80) auftretender Überdruck abbaubar als auch ein im Getriebegehäuse (80) auftretender Unterdruck abbaubar ist.

## Beschreibung

Die vorliegende Erfindung betrifft einen Handwerkzeuggetriebeverschluss mit einem Grundkörper zum Verschließen einer Getriebegehäuseöffnung eines Getriebegehäuses einer Handwerkzeugmaschine, insbesondere eines Bohrhammers oder Kombihammers, wobei der Handwerkzeuggetriebeverschluss einen Luftkanal aufweist, durch den eine Luftmasse in das und aus dem Getriebegehäuse strömen kann. Die vorliegende Erfindung betrifft ebenfalls eine Handwerkzeugmaschine mit einem Handwerkzeuggetriebeverschluss.

Innerhalb des Getriebegehäuses einer typischen Handwerkzeugmaschine kann ein Schlagwerk mit einem Kolben, Pleuel, sowie einem Döpper angeordnet sein. Diese werden durch ein in dem Getriebegehäuse befindliches Schmiermittel, beispielsweise ein Getriebeöl, geschmiert, um möglichst reibungsarm zusammenzuwirken. Typischerweise wird das Schmiermittel über die Getriebegehäuseöffnung in das Getriebegehäuse eingebracht. Um zu vermeiden, dass das Schmiermittel aus dem Getriebegehäuse austritt, wird die Getriebegehäuseöffnung durch einen Grundkörper eines Handwerkzeuggetriebeverschlusses verschlossen. Der Grundkörper kann als Stopfen ausgebildet sein.

Es ist Aufgabe der vorliegenden Erfindung, einen verbesserten Handwerkzeuggetriebeverschluss bereitzustellen, der eine erhöhte Lebensdauer einer Handwerkzeugmaschine begünstigt. Ebenfalls ist es Aufgabe der vorliegenden Erfindung, eine Handwerkzeugmaschine mit einem derart verbesserten Handwerkzeuggetriebeverschluss bereitzustellen.

Bezüglich des Handwerkzeuggetriebeverschlusses wird die Aufgabe dadurch gelöst, dass der Handwerkzeuggetriebeverschluss ein im Luftkanal angeordnetes bidirektionales Druckventil aufweist, über das sowohl ein im Getriebegehäuse auftretender Überdruck als auch ein im Getriebegehäuse auftretender Unterdruck abbaubar ist.

Vorteilhafterweise kann nun Luft, die aufgrund des Werkzeugmaschinenbetriebs und speziell durch Erhitzung des im Getriebegehäuse befindlichen Schmiermittels expandiert wird, aus dem Getriebegehäuse entweichen.

Die Erfindung schließt die Erkenntnis ein, dass der Innendruck eines Getriebegehäuses während des Betriebs der Werkzeugmaschine auf ein unerwünscht hohes Druckniveau steigt. Ein hohes Druckniveau ist der Lebensdauer und insbesondere auch den Arbeitsleistungsdaten, zum Beispiel der abgegebenen Schlagenergie, der Handwerkzeugmaschine abträglich. Der erfindungsgemäße Handwerkzeugverschluss trägt zu einer Beseitigung dieser Nachteile bei in dem ein Getriebeinnendruck geregelt werden kann. Ebenso wir ein Unterdruck im Getriebegehäuse, der beispielsweise bei niedrigen Außentemperaturen auftreten kann, vorteilhafterweise vermieden.

In einer bevorzugten Ausgestaltung ist das Druckventil innerhalb des Handwerkzeuggetriebeverschlusses angeordnet und kann als elastisches Schlauchelement ausgebildet sein. Besonders geht bevorzugt sowohl ein Abbau eines im Getriebegehäuse auftretenden Überdrucks als auch ein Abbau eines im Getriebegehäuse auftretenden Unterdrucks mit einer elastischen Verformung des Schlauchelements einher.

Bevorzugt weist der Handwerkzeuggetriebeverschluss einen im Grundkörper angeordneten Stützkörper auf, wobei das als elastisches Schlauchelement ausgebildete Druckventil, wenn ein Getriebeinnendruck und ein Umgebungsdruck im Wesentlichen gleich sind, sowohl gegen den Grundkörper, als auch gegen den Stützkörper abgestützt ist.

Besonders bevorzugt ist das elastische Schlauchelement, wenn ein Getriebeinnendruck und ein Umgebungsdruck im Wesentlichen gleich sind, an seinem inneren und äußeren Umfang jeweils nur teilweise abgestützt. Die nur teilweise Abstützung kann derart vorgesehen sein, dass für das Schlauchelement an seinem äußeren Umfang eine Außenausweichzone und an seinem inneren Umfang einen Innenausweichzone gebildet ist, bevorzugt hin zum Grundkörper und/oder Stützkörper. Besonders bevorzugt ist das Schlauchelement an seinem inneren und äußeren Umfang, bezogen auf die Oberfläche, jeweils nur zu weniger als 50 Prozent abgestützt. Stirnseitig kann das Schlauchelement, einen Teil des Luftkanals bildend, von dem Grundkörper beabstandet sein.

Besonders bevorzugt bildet der Stützkörper einen Ventilsitz für einen Überdruckausgleich und/oder bildet der Grundkörper einen Ventilsitz für einen Unterdruckausgleich.

Die Außenausweichzone und/oder die Innenausweichzone sind bevorzugt ringförmig ausgebildet und können koaxial zum Schlauchelement angeordnet sein. In einer weiteren bevorzugten Ausgestaltung ist der Stützkörper konisch ausgebildet und definiert damit zumindest abschnittsweise die Innenausweichzone. Bevorzugt bilden die Außenausweichzone und/oder die Innenausweichzone einen Abschnitt des Luftkanals.

Das als elastisches Schlauchelement ausgebildete Druckventil kann in vorgespanntem Zustand in den Handwerkzeuggetriebeverschluss eingebaut sein. Vorteilhafterweise besteht das als elastische Schlauchelement ausgebildete Druckventil aus Silikon.

Das Druckventil kann derart ausgelegt sein, das es erst mit dem Überschreiten einer vorbestimmten Druckdifferenz, beispielsweise 2 Bar, zwischen Umgebungsdruck und Getriebeinnendruck öffnet (Überdruckausgleich). Dies ist beispielsweise vorteilhaft, wenn die Werkzeugmaschine ein elektropneumatisches Schlagwerk aufweist für das ein Sollüberdruck wünschenswert ist.

Es hat sich als vorteilhaft erwiesen, wenn der Handwerkzeuggetriebeverschluss ein Deckelteil mit Lüftungsöffnungen aufweist. Das Deckelteil ist bevorzugt ausgebildet den Stützkörper gegen den Grundkörper zu halten. Das Deckelteil und der Stützkörper können als voneinander verschiedene Teile ausgebildet sein. Alternativ können das Deckelteil und der Stützkörper als ein gemeinsames Teil einteilig ausgebildet sein. In einer besonders bevorzugten Ausgestaltung weist der Handwerkzeuggetriebeverschluss ein luftdurchlässiges und insbesondere im Wesentlichen getriebeöldichtes Abdichtelement auf. Das Abdichtelement ist vorzugsweise im Luftkanal angeordnet. Diesbezüglich hat der Erfinder erkannt, dass ein Schmiermittel, insbesondere Öl, nicht aus einem Getriebegehäuse austreten darf, da sonst zum einen die Schmierleistung sinkt zum anderen die für den Anwender sichtbare Oberfläche der Werkzeugmaschine verschmutzt. Durch ein luftdurchlässiges und getriebeöldichtes Abdichtelement kann zum einen ein Druckausgleich erfolgen, zum anderen wird ein Ölaustritt aus dem Getriebegehäuse vermieden.

Es hat sich als vorteilhaft herausgestellt, wenn das Abdichtelement aus Filz besteht oder wenigstens Filz aufweist. Das Abdichtelement kann aus einem dichten textilen Fasergut bestehen. Es hat sich als weiter vorteilhaft herausgestellt, wenn das Abdichtelement zumindest abschnittsweise unterhalb des Druckventils angeordnet ist, wenn sich der Handwerkzeuggetriebeverschluss in seiner bestimmungsgemäßen Einbausituation befindet.

Bevorzugt ist der Grundkörper, der Stützkörper und/oder das Deckelteil rotationssymmetrisch ausgebildet. Auf diese Art und Weise ist eine kostengünstige Fertigung auf einer Drehbank möglich. Um ein gleichmäßig verteiltes Strömen von Luft durch die Lüftungsöffnungen zu ermöglichen, sind die Lüftungsöffnungen vorzugsweise ringförmig an einer Oberfläche des Deckelteils angeordnet.

In einer weiteren bevorzugten Ausführungsform weist der Grundkörper einen wannenförmigen Abschnitt auf, der bevorzugt gegenüber dem Deckelteil angeordnet ist und weiter bevorzugt in das Getriebegehäuse hineinragt, wenn der Grundkörper die Getriebegehäuseöffnung verschließt. Der wannenförmige Abschnitt des Grundkörpers kann eine Öffnungsbohrung aufweisen, über die eine Luftmenge in den Luftkanal ein- oder austreten kann. Der wannenförmige Abschnitt des Grundkörpers kann rotationssymmetrisch ausgebildet sein. Bevorzugt ist die Öffnungsbohrung als Durchgangsbohrung entlang einer Sekante des rotationssymmetrisch ausgebildeten wannenförmigen Abschnitts des Grundkörpers ausgebildet.

In einer bevorzugten Ausgestaltung weist der Grundkörper einen Dichtring auf, der angeordnet ist, den Grundkörper umfangseitig zur Getriebegehäuseöffnung abzudichten. Bevorzugt ist der Grundkörper als Stopfen ausgebildet. Eine Stopfen-Funktion des Grundkörpers kann beispielsweise durch einen am Grundkörper vorgesehenen Dichtring bewirkt sein. Alternativ oder zusätzlich kann der Grundkörper Lamellen aufweisen, die ausgebildet sind, den Grundkörper in einer Getriebegehäuseöffnung kraftschlüssig zu halten.

Bezüglich der Handwerkzeugmaschine wird die Aufgabe dadurch gelöst, dass die Handwerkzeugmaschine einen vorbeschriebenen Handwerkzeuggetriebeverschluss aufweist. Weitere Vorteile ergeben sich aus der folgenden Figurenbeschreibung. In den Figuren sind Ausführungsbeispiele der vorliegenden Erfindung dargestellt, die Figuren, die Beschreibung und die Ansprüche enthalten zahlreiche Merkmale und Kombinationen. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung eines Handwerkzeuggetriebeverschlusses in Seitenansicht;
- Fig. 2: einen schematische Darstellung des Handwerkzeuggetriebeverschluss, wenn Getriebeinnendruck und Umgebungsdruck im Wesentlichen gleich sind;
- Fig. 3: eine schematische Explosionsdarstellung eines erfindungsgemäßen Handwerkzeuggetriebe-verschlusses;
- Fig. 4: eine schematische Darstellung des Handwerkzeuggetriebeverschlusses aus Fig. 2, wenn der Getriebeinnendruck größer als der Getriebeumgebungsdruck ist;
- Fig. 5: eine schematische Darstellung des Handwerkzeuggetriebeverschlusses aus Fig. 2, wenn der Getriebeinnendruck kleiner als der Getriebeumgebungsdruck ist;
- Fig. 6: eine schematische perspektivische Darstellung eines erfindungsgemäßen Handwerkzeuggetriebeverschlusses; und
- Fig. 7: eine Handwerkzeugmaschine mit einem Handwerkzeuggetriebeverschluss.

### Ausführungsbeispiele:

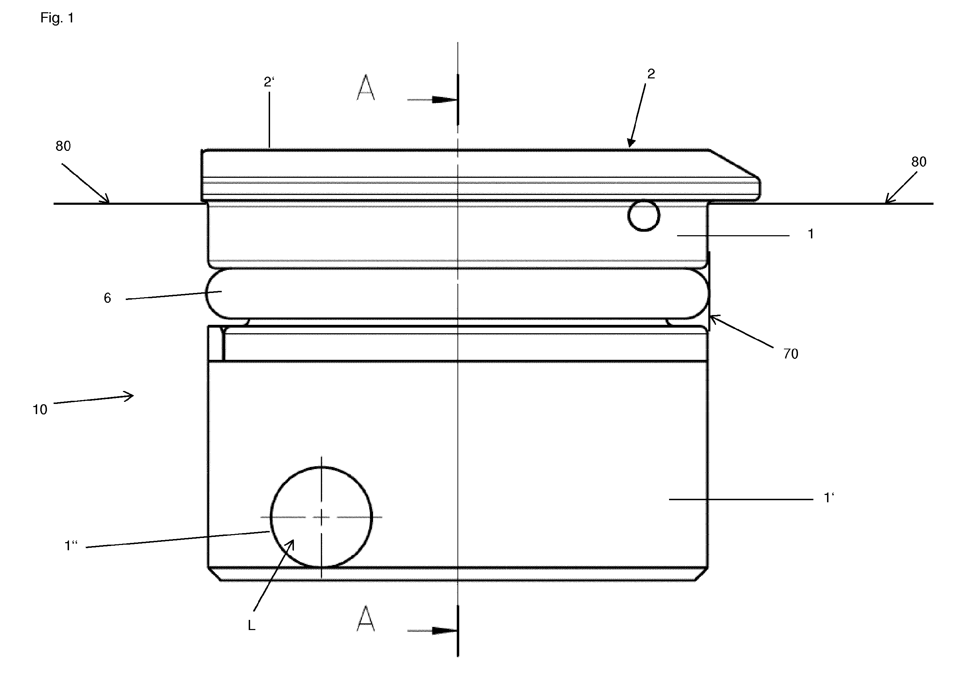

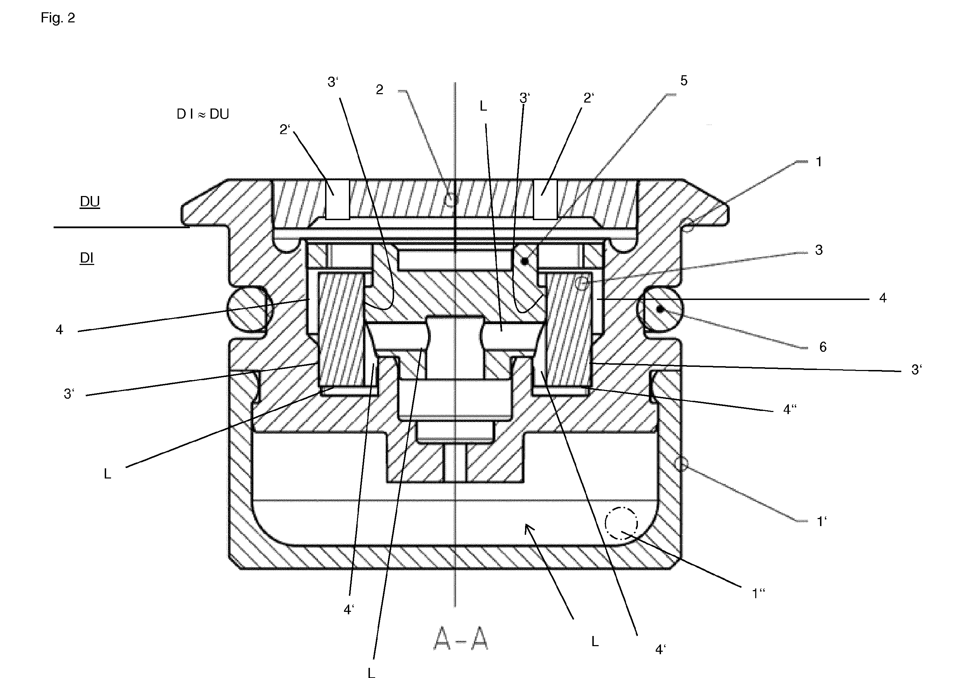

In Fig. 1 ist ein erfindungsgemäßer Handwerkzeuggetriebeverschluss 10 in Seitenansicht mit eingezeichneter Schnittlinie A-A dargestellt. Die Fig. 2, 4 und 5 zeigen jeweils einen Schnitt A-A durch den Handwerkzeuggetriebeverschluss 10 entsprechend der Schnittlinie A-A der Fig. 1.

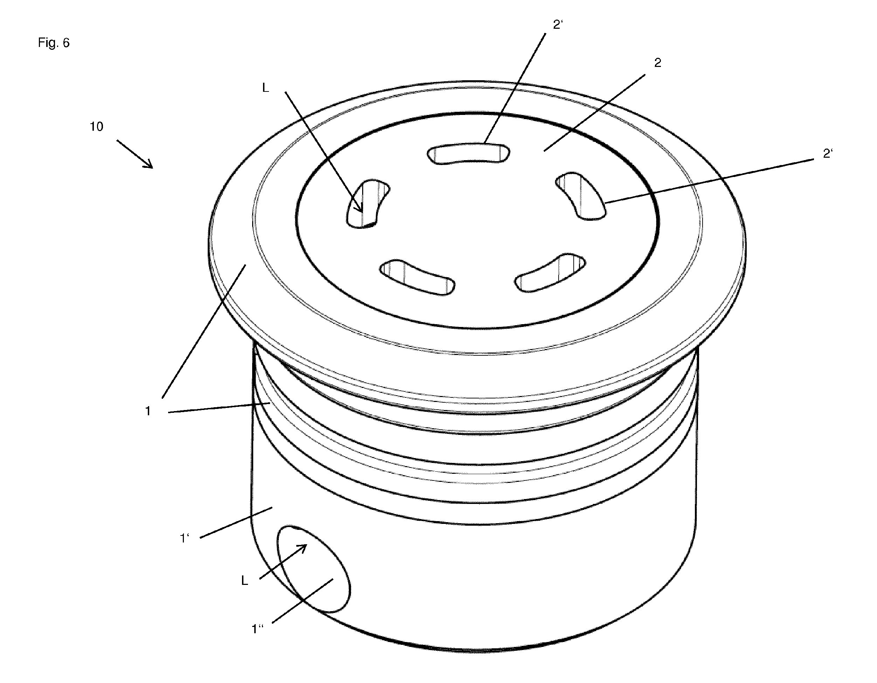

Der Handwerkzeuggetriebeverschluss 10 in Fig. 1 weist einen Grundkörper 1 zum Verschließen einer Getriebegehäuseöffnung 70 eines Getriebegehäuses 80 auf. Mittels eines umlaufenden Dichtrings 6 ist der Grundkörper 1 umfangsseitig zur Getriebegehäuseöffnung 70 hin abgedichtet. Des Weiteren weist der Handwerkzeuggetriebeverschluss 10 ein Deckelteil 2 auf, das an seiner Oberfläche eine Lüftungsöffnung 2' aufweist. In der Darstellung der Fig. 1 ist lediglich die Lage der Lüftungsöffnung 2' erkennbar. Eine Ausgestaltung der Lüftungsöffnung 2' ist beispielsweise der Fig. 6 zu entnehmen, die eine perspektivische Darstellung des erfindungsgemäßen Handwerkzeuggetriebeverschlusses 10 zeigt.

Der Handwerkzeuggetriebeverschluss 10 weist ferner einen Luftkanal L auf, durch den eine (nicht dargestellte) Luftmasse in das und aus dem Getriebegehäuse zwecks Druckausgleichs strömen kann. In Fig. 1 ist lediglich ein Abschnitt des Luftkanals L erkennbar, der durch eine Öffnungsbohrung 1" in einem wannenförmigen Abschnitt 1' des Grundkörpers 1 gebildet wird.

Fig. 2 zeigt eine schematische Darstellung des Handwerkzeuggetriebeverschluss 10 der Fig. 1, wobei in Fig. 2 der Zustand dargestellt ist, wenn Getriebeinnendruck DI und Umgebungsdruck DU im Wesentlichen gleich sind. Dies ist beispielsweise der Fall, wenn die Handwerkzeugmaschine längere Zeit nicht im Betrieb war oder während des Betriebs der Handwerkzeugmaschine, wenn ein Druckausgleich bereits erfolgt ist.

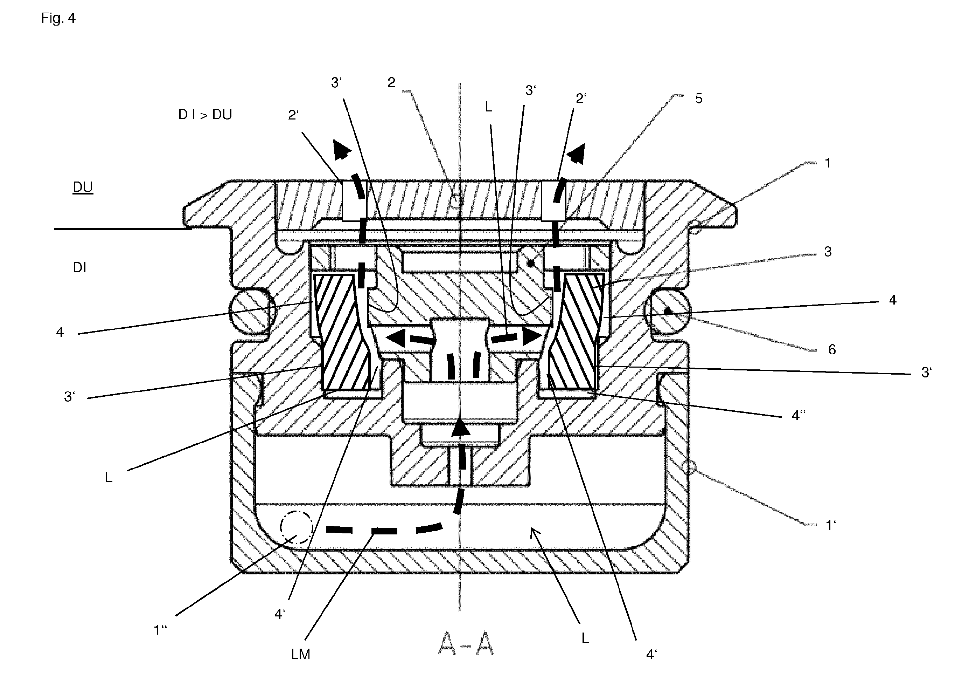

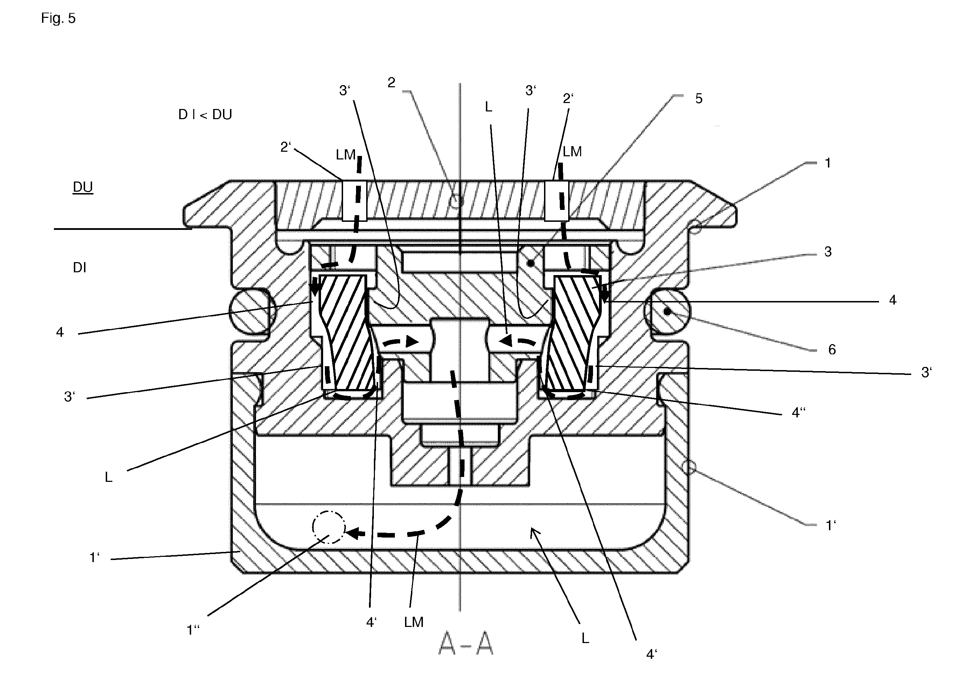

Im Luftkanal L des Handwerkzeuggetriebeverschlusses 10 ein bidirektionales Druckventil 3 angeordnet, über das sowohl ein im Getriebegehäuse 80 auftretender Überdruck, d.h. DI > DU (vgl. Fig. 4), als auch ein im Getriebegehäuse 80 auftretender Unterdruck, d.h. DI < DU (vgl. Fig. 5) abbaubar ist.

Vorliegend ist das Druckventil 3 innerhalb des Handwerkzeuggetriebeverschlusses 10 angeordnet und als elastisches Schlauchelement bestehend aus Silikon ausgebildet. Das als elastisches Schlauchelement ausgebildete Druckventil 3 ist koaxial zum rotationssymmetrisch ausgebildeten Grundkörper 1 des Handwerkzeuggetriebeverschlusses 10 angeordnet.

Der Handwerkzeuggetriebeverschluss 10 weist einen im Grundkörper 1 angeordneten Stützkörper 5 auf, wobei das als elastisches Schlauchelement ausgebildete Druckventil 3 sowohl gegen den Grundkörper 1 als auch gegen den Stützkörper 5 abgestützt ist.

Dabei ist das als elastisches Schlauchelement bereitgestellte Druckventil 3 an seinem inneren und äußeren Umfang jeweils nur teilweise abgestützt. Am inneren Umfang ist das als elastisches Schlauchelement bereitgestellte Druckventil 3 nur am Stützkörper 5 abgestützt, und zwar auf weniger als 50 Prozent seiner inneren Oberfläche. Am äußeren Umfang ist das als elastisches Schlauchelement bereitgestellte Druckventil 3 nur am Grundkörper 1 abgestützt, und zwar auf weniger als 50 Prozent seiner äußeren Oberfläche.

Somit wird für das als elastisches Schlauchelement ausgebildete Druckventil 3 an seinem äußeren Umfang eine Außenausweichzone 4 und an seinem inneren Umfang einen Innenausweichzone 4' gebildet. In die Außenausweichzone 4 bzw. in die Innenausweichzone 4' kann das elastische Schlauchelement im Zuge eines Druckausgleichs ungehindert ausgelenkt werden. Stirnseitig ist das Schlauchelement auf seiner Unterseite, einen Teil des Luftkanals L in einem Freiraum 4" bildend, von dem Grundkörper 1 beabstandet.

Die Außenausweichzone 4 verläuft umlaufend zum Stützkörper und ist sowohl bezüglich des Grundkörpers 1 als auch des Stützkörpers 5 koaxial angeordnet. Die Innenausweichzone 4' verläuft umlaufend zum Stützkörper und ist sowohl bezüglich des Grundkörpers 1 als auch des Stützkörpers 5 koaxial angeordnet. Die Außenausweichzone 4 ist ausschließlich durch einen Raum zwischen der Außenseite des Schlauchelements und dem Grundkörper 1 definiert, wohingegen die Innenausweichzone 4' durch einen Raum zwischen der Innenseite des Schlauchelements und des Stützkörpers 5 definiert ist. Dabei ist der Stützkörper 5 in seinem unteren Bereich konisch ausgebildet und definiert damit zumindest abschnittsweise die Innenausweichzone 4'.

Wie ebenfalls dem Ausführungsbeispiel der Fig. 2 entnommen werden kann, schließt das Deckelteil 2, das ebenfalls rotationssymmetrisch ausgebildet ist, den Grundkörper 1 zur Umgebung ab, wobei das Deckelteil 2 zusätzlich ausgebildet ist den Stützkörper 5 gegen den Grundkörper 1 zu halten, vorzugsweise zu spannen.

Der Grundkörper 1 weist einen wannenförmigen Abschnitt 1' auf, in dem eine Öffnungsbohrung 1" angeordnet ist. Diese Öffnungsbohrung 1" bildet gleichermaßen einen Eintritt für den Luftkanal L des Handwerkzeuggetriebeverschlusses, wobei sich der Luftkanal L durch den Handwerkzeuggetriebeverschluss 10 hindurch bis zur Lüftungsöffnung 2' im Deckelteil 2 erstreckt.

Das vorgespannt in den Handwerkzeuggetriebeverschluss 10 eingebaute und als elastisches Schlauchelement ausgebildete Druckventil 3 liegt press gegen einen Ventilsitz 3', der zum einen Teil des Stützkörpers 5 zum anderen Teil des Grundkörpers 1 ist.

Aufgrund der in Fig. 2 gewählten Schnittdarstellung des Handwerkzeuggetriebeverschlusses 10 sind zwei der Lüftungsöffnungen 2' des Deckelteils 2 erkennbar. Übrige Lüftungsöffnungen 2', die ringförmig an der Oberfläche des Deckelteils angeordnet sind, sind beispielsweise Fig. 6 entnehmbar.

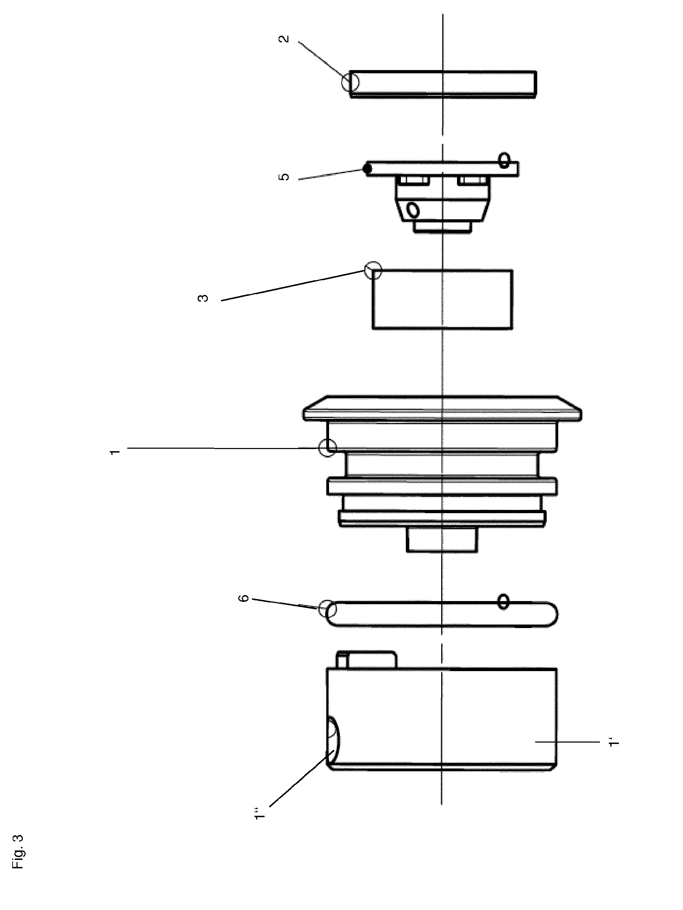

In Fig. 3 ist eine Explosionsdarstellung des soeben mit Bezug auf Fig. 2 beschriebenen Handwerkzeuggetriebeverschlusses 10 dargestellt. Wie der Fig. 3 entnommen werden kann, sind der wannenförmige Abschnitt 1', der Dichtring 6, der Grundkörper 1, das als elastisches Schlauchelement bereitgestellte bidirektionale Druckventil 3, der Stützkörper 5 sowie das Deckelteil 2 koaxial zueinander angeordnet.

Fig. 4 zeigt nunmehr den gleichen Handwerkzeuggetriebeverschluss 10 wie Fig. 2, wobei in Fig. 4 der Zustand gezeigt ist, den das Druckventil 3 einnimmt, wenn der Getriebedruck DI den Umgebungsdruck DU übersteigt, d.h. im Getriebegehäuse 80 ein Überdruck herrscht. Dies ist beispielsweise der Fall, wenn das Schlagwerk (nicht gezeigt) ein im Getriebegehäuse 80 befindliches Schmiermittel erwärmt hat. Das Druckventil 3 ist vorliegend derart ausgelegt, dass es erst mit dem Überschreiten einer vorbestimmten Druckdifferenz von 2 Bar zwischen Umgebungsdruck DU und Getriebedruck DI öffnet um einen Sollüberdruck im Getriebegehäuse 80 zu erreichen, d.h. das Druckventil 3 öffnet erst, wenn der Getriebedruck DI den Umgebungsdruck DU um 2 Bar überschreitet.

Im Folgenden wird mit Bezug auf Fig. 4 der Luftkanal L, der sich durch den Handwerkzeuggetriebeverschluss 10 hindurch erstreckt, näher erläutert. Beginnend in der Öffnungsbohrung 1" erstreckt sich der Luftkanal L durch den wannenförmigen Abschnitt 1' des Grundkörpers 1 hindurch in Richtung des zentral angeordneten Abdichtelements 8. Von dort aus und verzweigt sich der Luftkanal L in parallel geschaltete Kanalabschnitte, die durch mehrere am Umfang des Stützkörpers 5 angeordnete Bohrungen gebildet sind und jeweils zum Druckventil 3 führen. Das Druckventil 3 ist erfindungsgemäß innerhalb des Luftkanals L des Handwerkzeuggetriebeverschlusses 10 angeordnet. Die Lüftungsöffnungen 2' des Deckelteils 2 bilden ihrerseits Abschnitte des Luftkanals L des Handwerkzeuggetriebeverschlusses 10. Mit Lüftungsöffnungen 2' des Deckelteils 2 endet der Luftkanal L.

Des Weiteren ist in Fig. 4 exemplarisch mittels einer gestrichelten Linie eine Luftmasse LM dargestellt, die sich aufgrund des Getriebeinnendrucks DI, der größer als der Umgebungsdruck DU ist, in Pfeilrichtung durch den Luftkanal L Handwerkzeuggetriebeverschlusses 10 aus dem Getriebegehäuse 80 heraus bewegt. Dabei passiert die Luftmasse LM zunächst die Öffnungsbohrung 1".

Wie ebenfalls in Fig. 4 erkennbar ist, bewegt sich die Luftmasse LM im in Richtung des als elastisches Schlauchelement ausgebildeten Druckventils 3, wobei dieses in seinem oberen Bereich unter elastischer Verformung zur Außenseite des Grundkörpers 1 gedrückt wird, also wie in Fig. 4 gezeigt von dem Teil des Ventilsitzes 3' abhebt, der vom Stützkörper 5 umfasst ist. Der Stützkörper 5 bildet also einen Ventilsitz für den Überdruckausgleich. Dabei kann das Schlauchelement in die Außenausweichzone 4 ausweichen. Wie ebenfalls der Fig. 4 entnommen werden kann, ist das als elastisches Schlauchelement ausgebildete Druckventil 3 während eines Überdruckabbaus nur gegen den Grundkörper 1 gelagert.

Im weiteren Verlauf kann die Luftmasse LM, entsprechend der Pfeilrichtung der gestrichelten Linie, durch die Lüftungsöffnungen 2' des Deckelteils 2 aus dem Handwerkzeuggetriebeverschlusses 10 entweichen. Nach erfolgtem Druckausgleich kehrt das Druckventil 3 in seine in Fig. 2 gezeigte Ausgangslage zurück.

Fig. 5 zeigt nunmehr den gleichen Handwerkzeuggetriebeverschluss 10 wie Fig. 2, wobei in Fig. 5 der Zustand gezeigt ist, den das Druckventil 3 einnimmt, wenn der Getriebeinnendruck DI niedriger als der Umgebungsdruck DU ist, d.h. im Getriebegehäuse 80 ein Unterdruck herrscht. Dafür ist in Fig. 5 exemplarisch mittels einer gestrichelten Linie eine Luftmasse LM dargestellt, die sich aufgrund des Getriebeinnendrucks DI, der kleiner als der Umgebungsdruck DU ist, in Pfeilrichtung durch den Luftkanal L Handwerkzeuggetriebeverschlusses 10 in das Getriebegehäuse 80 hinein bewegt. Dabei passiert die Luftmasse LM zunächst die Lüftungsöffnung 2".

Wie ebenfalls in Fig. 5 erkennbar ist, bewegt sich die Luftmasse LM im in Richtung des als elastisches Schlauchelement ausgebildeten Druckventils 3, wobei dieses in seinem unteren Bereich unter elastischer Verformung in Richtung des Stützkörpers 5 gedrückt wird, also wie in Fig. 5 gezeigt von dem Teil des Ventilsitzes 3' abhebt, der vom Grundkörper 1 umfasst ist. Der Grundkörper 1 bildet also einen Ventilsitz für einen Unterdruckausgleich. Dabei kann das Schlauchelement in die Innenausweichzone 4' ausweichen. Wie ebenfalls der Fig. 5 entnommen werden kann, ist das als elastisches Schlauchelement ausgebildete Druckventil 3 während eines Überdruckabbaus nur gegen den Stützkörper 5 gelagert. Dies auf Grund seines Einbaus im vorgespannten Zustand.

Im weiteren Verlauf kann die Luftmasse LM, entsprechend der Pfeilrichtung der gestrichelte Linie, durch die Öffnungsbohrung 1" des wannenförmigen Abschnitts 1' des Grundkörpers 1 in das Getriebegehäuse eintreten. Nach erfolgtem Druckausgleich kehrt das Druckventil 3 in seine in Fig. 2 gezeigte Ausgangslage zurück.

Fig. 6 zeigt den Handwerkzeuggetriebeverschluss 10 in einer schematischen und perspektivischen Darstellung. Gut erkennbar ist die rotationssymmetrische Ausbildung des Grundkörpers 1 mit seinem wannenförmigen Abschnitt 1', sowie die rotationssymmetrische Ausbildung des Deckelteils 2, an dessen Oberfläche ringförmig fünf Lüftungsöffnungen 2' angeordnet sind. Auf der im Einbauzustand einem Schlagwerk 60 (siehe Fig. 6) zugewandten Seite des wannenförmigen Abschnitts 1' des Grundkörpers 1 ist die Öffnungsbohrung 1" angeordnet, durch die eine Luftmasse LM in den Luftkanal L des Handwerkzeuggetriebeverschlusses 10 (im Falle eines Überdruckabbaus) eintreten bzw. (im Falle eines Unterdruckausgleichs) austreten kann.

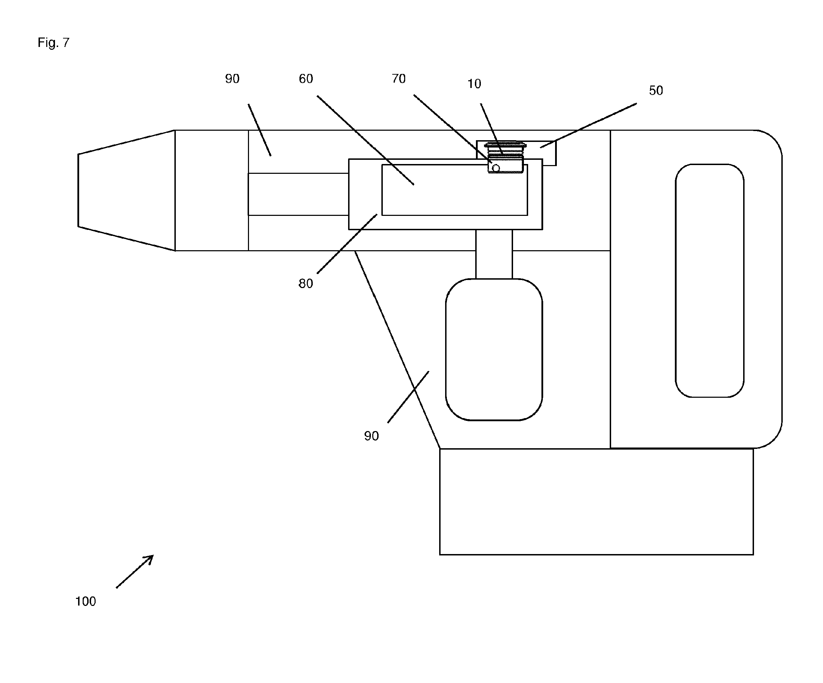

Eine erfindungsgemäße Handwerkzeugmaschine 100 mit einem Handwerkzeuggetriebeverschluss 10 ist in Fig. 7 gezeigt. Die Handwerkzeugmaschine 100 weist ein Gehäuse 90 auf, das ein Getriebegehäuse 80 umschließt. Innerhalb des Getriebegehäuses 80 ist ein Schlagwerk 60 angeordnet, das im Zuge des Betriebs der Handwerkzeugmaschine 100 Wärme entwickelt. Auf der Oberseite des Getriebegehäuses 80 ist eine Getriebegehäuseöffnung 70 angeordnet, die vorliegend durch einen Handwerkzeuggetriebeverschluss 10 verschlossen ist. Der Handwerkzeuggetriebeverschluss 10 ist durch eine Schwingplatte 50 abgedeckt.

### Bezugszeichenliste

- DI: Getriebeinnendruck
- DU: Umgebungsdruck
- L: Luftkanal
- LM: Luftmasse
- 1: Grundkörper
- 1': wannenförmiger Abschnitt
- 1": Öffnungsbohrung
- 2: Deckelteil
- 2': Lüftungsöffnung
- 3: bidirektionales Druckventil
- 3': Ventilsitz
- 4: Außenausweichzone
- 4': Innenausweichzone
- 4": Freiraum
- 5: Stützkörper
- 6: Dichtring
- 8: Abdichtelement
- 10: Handwerkzeuggetriebeverschluss
- 50: Schwingplatte
- 60: Schlagwerk
- 70: Getriebegehäuseöffnung
- 80: Getriebegehäuse
- 90: Werkzeuggehäuse
- 100: Handwerkzeugmaschine

## Patentansprüche

1. Handwerkzeuggetriebeverschluss (10) mit einem Grundkörper (1) zum Verschließen einer Getriebegehäuseöffnung (70) eines Getriebegehäuses (80) einer Handwerkzeugmaschine (100), insbesondere eines Bohrhammers oder Kombihammers, wobei der Handwerkzeuggetriebeverschluss (10) einen Luftkanal (L) aufweist, durch den eine Luftmasse (LM) in das und aus dem Getriebegehäuse (80) strömen kann,
**dadurch gekennzeichnet, dass** der Handwerkzeuggetriebeverschluss (10) ein im Luftkanal (L) angeordnetes bidirektionales Druckventil (3) aufweist, über das sowohl ein im Getriebegehäuse (80) auftretender Überdruck als auch ein im Getriebegehäuse (80) auftretender Unterdruck abbaubar ist.

2. Handwerkzeuggetriebeverschluss (10) nach Anspruch 1,
**dadurch gekennzeichnet, dass** das Druckventil (3) innerhalb des Handwerkzeuggetriebeverschlusses (10) angeordnet und als elastisches Schlauchelement ausgebildet ist, wobei sowohl ein Abbau eines im Getriebegehäuse (80) auftretenden Überdrucks als auch ein Abbau eines im Getriebegehäuse (80) auftretenden Unterdrucks mit einer elastischen Verformung des Schlauchelements einhergeht.

3. Handwerkzeuggetriebeverschluss (10) nach Anspruch 2,
**dadurch gekennzeichnet, dass** der Handwerkzeuggetriebeverschluss (10) einen im Grundkörper (1) angeordneten Stützkörper (5) aufweist, wobei das als elastisches Schlauchelement ausgebildete Druckventil (3), wenn ein Getriebeinnendruck (DI) und ein Umgebungsdruck (DU) im Wesentlichen gleich sind, sowohl gegen den Grundkörper (1), als auch gegen den Stützkörper (5) abgestützt ist.

4. Handwerkzeuggetriebeverschluss (10) nach Anspruch 2 oder 3,
**dadurch gekennzeichnet, dass** das elastische Schlauchelement, wenn ein Getriebeinnendruck (DI) und ein Umgebungsdruck (DU) im Wesentlichen gleich sind, an seinem inneren und äußeren Umfang jeweils nur teilweise abgestützt ist, derart, dass für das Schlauchelement an seinem äußeren Umfang eine Außenausweichzone (4) und an seinem inneren Umfang einen Innenausweichzone (4') gebildet ist, bevorzugt hin zum Grundkörper (1) und/oder Stützkörper (5).

5. Handwerkzeuggetriebeverschluss (10) nach einem der Ansprüche 2 bis 4,
**dadurch gekennzeichnet, dass** das Schlauchelement an seinem inneren und äußeren Umfang, bezogen auf die Oberfläche, jeweils nur zu weniger als 50 Prozent abgestützt ist.

6. Handwerkzeuggetriebeverschluss (10) nach einem der Ansprüche 3 bis 5,
**dadurch gekennzeichnet, dass** der Stützkörper (5) konisch ausgebildet ist und damit zumindest abschnittsweise die Innenausweichzone (4') definiert.

7. Handwerkzeuggetriebeverschluss (10) nach einem der Ansprüche 3 bis 6,
**dadurch gekennzeichnet, dass** der Handwerkzeuggetriebeverschluss (10) ein Deckelteil (2) mit Lüftungsöffnungen (2') aufweist, wobei das Deckelteil (2) ausgebildet ist den Stützkörper (5) gegen den Grundkörper (1) zu halten.

8. Handwerkzeuggetriebeverschluss (10) nach einem der vorangehenden Ansprüche,
**dadurch gekennzeichnet, dass** der Grundkörper (1) einen Dichtring (6) aufweist, der angeordnet ist, den Grundkörper (1) umfangsseitig zur Getriebegehäuseöffnung (70) abzudichten.

9. Handwerkzeuggetriebeverschluss (10) nach einem der vorangehenden Ansprüche,
**dadurch gekennzeichnet, dass** der Grundkörper (1) als Stopfen ausgebildet ist.

10. Handwerkzeugmaschine (100), insbesondere Bohrhammer oder Kombihammer, mit einem vom einem Werkzeuggehäuse (90) umschlossenen Getriebegehäuse (80), das über ein Getriebegehäuseöffnung (70) zugänglich ist,
**dadurch gekennzeichnet, dass** die Handwerkzeugmaschine (100) einen Handwerkzeuggetriebeverschluss (10) nach einem der vorangehende Ansprüche aufweist.
